# FASCICULE DE BREVET EUROPEEN

(11) **EP 2 390 166 B1**
(45) Date de publication et mention de la délivrance du brevet: **13.03.2013**
(21) Numéro de dépôt: 11168138.3
(22) Date de dépôt: 30.05.2011
(51) Int. Cl.: B62D 21/06, B62D 21/12, B62D 21/15, B62D 29/00, B62D 29/02, B62D 67/00, B62D 29/04

(54) **Véhicule modulaire écologique**
Ökologisches modulares Fahrzeugkonzept
Ecological modular vehicle

(30) Priorité: 30.06.2010 FR 1055266; 28.05.2010 EP 10305568
(43) Date de publication de la demande: 30.11.2011
(73) Titulaire: 4C-Ecomobile, 78700 Conflans Sainte-Honorine (FR)
(72) Inventeur: Thome, Jean-Philippe, 78700 CONFLANS SAINTE-HONORINE (FR)
(74) Mandataire: den Braber, Gerard Paul

(56) Documents cités:
- CN-Y- 201 062 052
- DE-C- 892 554
- GB-A- 520 789
- GB-A- 759 592
- JP-A- 1 111 574
- JP-A- 5 069 854

## Description

DOMAINE TECHNIQUE

Un aspect de l'invention concerne un véhicule disposant d'au moins deux paires de roues et muni d'un châssis. Le véhicule peut être sous forme, par exemple, d'une automobile compacte pour une utilisation principalement urbaine. Un autre aspect de l'invention concerne un procédé pour fabriquer un châssis.

ETAT DE LA TECHNIQUE ANTERIEURE

Un véhicule classique est typiquement composé de matériaux difficilement recyclables, ou même non recyclables. De plus, un véhicule classique est relativement lourd, ce qui entraîne une consommation énergétique relativement importante. Ceci est au moins partiellement dû à une conception traditionnelle, fondée sur un concept de structure métallique mono-corps qui rend une réduction de poids difficile. De plus, ce concept de châssis de structure mono-corps est peu approprié pour réaliser un véhicule modulaire, qui peut être facilement adapté à différents types d'utilisation.

La publication brevet JP 5 069854 A décrit un agencement dans lequel une partie centrale de châssis est entourée par une partie sous forme d'un tunnel qui correspond à ce qui est décrit part le préambule de la revendication 1. La publication brevet DE 892 554 C décrit un châssis pour voitures automobiles dans lequel des parties extrêmes sont fixées à une partie centrale en forme de tube ou boîte centrale. La publication brevet JP 1 111574 A décrit un véhicule dans lequel une cabine est disposée à mi-section dans une direction longitudinale d'une structure de châssis formant une section de base d'une carrosserie. La publication brevet GB 520 789 A décrit des pièces de carrosserie pour véhicules automobiles.

EXPOSE DE L'INVENTION

Il existe un besoin pour une solution permettant de réaliser un véhicule modulaire écologique.

Les revendications indépendantes 1 et 13 résolvent ce problème.
Les revendications dépendantes définissent des caractéristiques supplémentaires qui peuvent être avantageusement appliquées pour mettre en oeuvre l'invention.

Un véhicule selon l'invention permet de répondre à des besoins modernes de mobilité urbaine individuelle ou partagée, dans un esprit de relation durable avec l'environnement. Ceci concerne des aspects liés aux émissions de CO2, au niveau de bruit, mais également l'emprise au sol, et la recyclabilité. Le véhicule peut avoir une structure compacte, modulaire, faisant appel à des matériaux naturels. Le véhicule est configurable à façon, multi-usages, plurifonctionnel et personnalisable.

Une description détaillée en référence à des dessins illustre l'invention brièvement exposée précédemment, ainsi que les caractéristiques supplémentaires.

DESCRIPTION SOMMAIRE DES DESSINS
- La figure 1 est un diagramme schématique illustrant une vue en perspective d'un véhicule modulaire écologique.
- La figure 2 est un diagramme schématique illustrant une vue explosée en perspective d'une poutre formant une partie du châssis du véhicule modulaire écologique.
- La figure 3 est un diagramme schématique illustrant une vue en coupe d'un dispositif d'absorption de choc pour le véhicule modulaire écologique.
- La figure 4 est un diagramme schématique illustrant une vue explosée en perspective d'un montage d'un module de plancher et de traverses de renfort sur la poutre.
- La figure 5 est un diagramme schématique illustrant une vue explosée en coupe du montage illustré à la figure 4, auquel des glissières de siège ont été ajoutées.
- La figure 6 est un diagramme schématique illustrant une vue en coupe d'un ensemble obtenu par le montage illustré à la figure 5.
- La figure 7 est un diagramme schématique illustrant une vue explosée en perspective d'un montage des glissières de siège et des sièges sur les traverses de renfort.
- La figure 8 est un diagramme schématique illustrant une vue en perspective d'un module arrière sur lequel un demi-train arrière droit est monté.

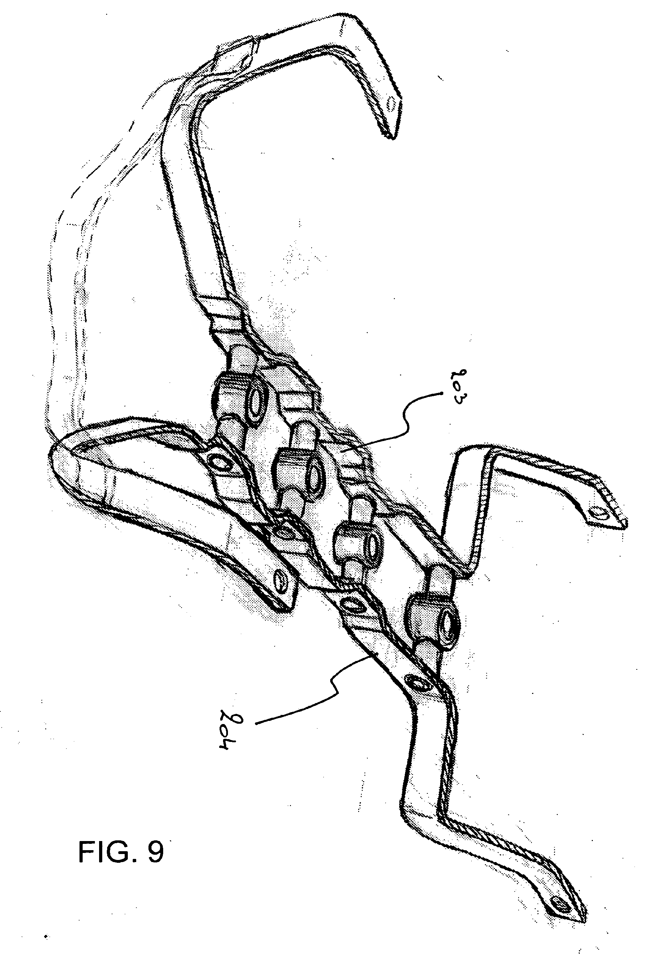

- La figure 9 est un diagramme schématique illustrant une vue en perspective d'une structure de base pour une alternative à la poutre illustrée à la figure 2.

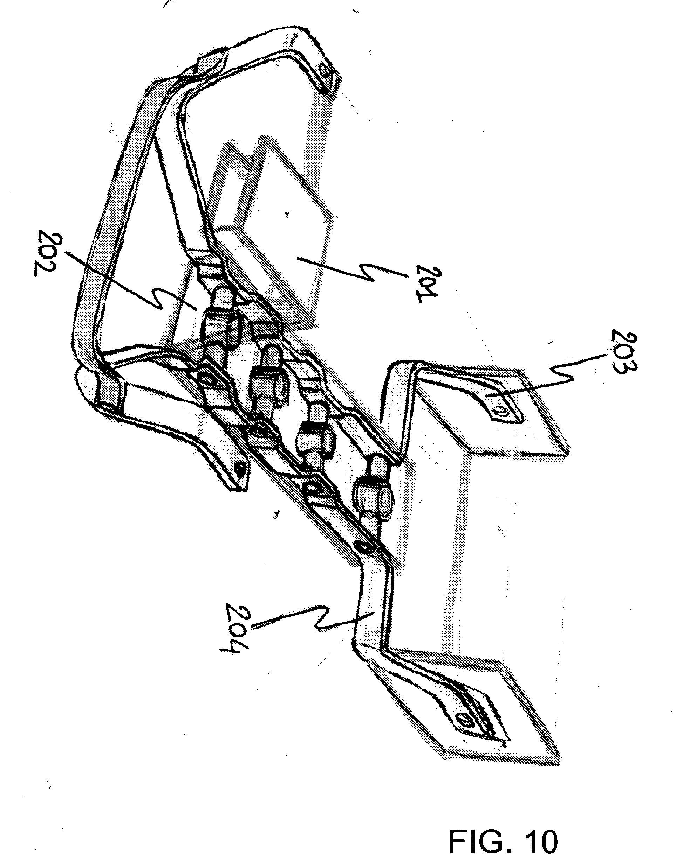

- La figure 10 est un diagramme schématique illustrant une vue en perspective de l'alternative à la poutre illustrée à la figure 2.

DESCRIPTION DETAILLEE

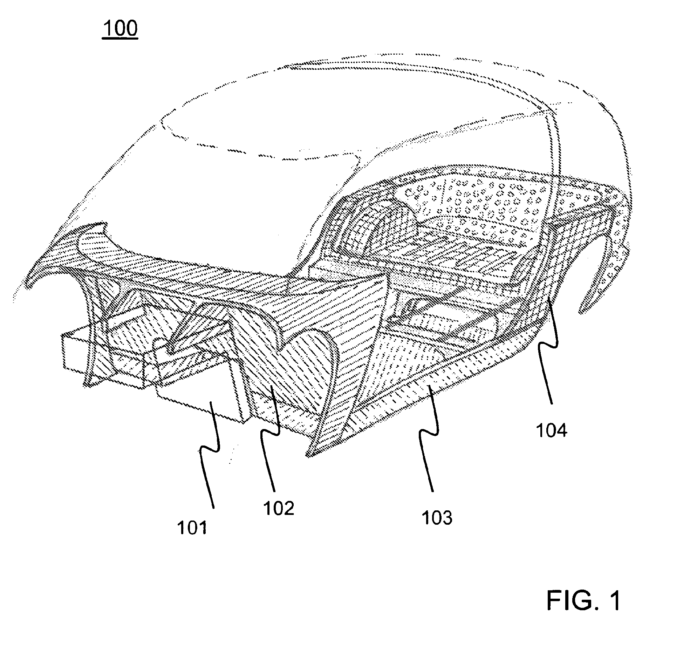

La figure 1 illustre schématiquement un véhicule modulaire écologique 100 au moyen d'une vue en perspective. Le véhicule modulaire écologique sera appelé « véhicule » 100 dans ce qui suit pour motif de simplicité. Le véhicule 100 dispose d'au moins deux paires de roues, non représentées, et est muni d'un châssis. Le châssis comprend une poutre 101 disposée de manière centrale par rapport aux paires de roues. Un jeu de modules peut être monté sur la poutre 101 de façon amovible. Le jeu de modules comprend au moins un module avant 102 pouvant accueillir un train avant, un module plancher 103, et un module arrière 104 pouvant accueillir un train arrière.

Le module avant 102, le module plancher 103, et le module arrière 104 forment des éléments structuraux fondamentaux du véhicule 100. Ces modules constituent principalement une architecture de base roulante. Les modules contribuent à conférer au véhicule 100 une rigidité d'ensemble importante. Les modules sont conçus de façon telle que leurs assemblages autour de la poutre 101 renforcent mutuellement leur rigidité par des emboîtages et blocages appropriés.

Grâce à un concept modulaire qui est illustré à la figure 1, un degré de standardisation élevé peut être atteint, afin de permettre une utilisation commune à un grand nombre de véhicules. Ainsi le passage d'une base roulante d'un véhicule 2 places à celle d'un véhicule 4 places pourra se faire de façon simple en « jumboïsant » la base roulante. Autrement dit, une « tranche » peut être ajoutée à la base roulante en utilisant des modules standards, identiques pour de nombreuses versions qui peuvent exister pour le véhicule 100. Il suffit de changer la poutre 101, qui sera plus longue dans le cas du passage au véhicule 100 4 places et de remplacer le module plancher 103 par une version plus longue.

Les modules montables de façon amovible sur la poutre 101 sont avantageusement réalisés en matériaux composites incorporant des fibres résistantes à la flexion comme, par exemple, des fibres de bambou. Ces fibres résistantes à la flexion peuvent être liées entre elles par une matière thermoplastique. Les fibres peuvent être utilisées sous forme de fibres en vrac, ou sous forme de tissus liés à une matrice polymère thermoplastique ou thermodurcissable. De préférence, des couches de fibres de bambou longues sont orientées selon un axe d'un effort à contrôler. Un avantage de la fibre de bambou est qu'elle permet de réaliser des pièces de grande envergure particulièrement légères. La fibre de bambou permet donc de réaliser des zones à forte rigidité, par exemple, dans les modules avant et arrière.

Les modules peuvent être fabriqués par un processus de thermoformage utilisant des éléments de renfort comme la fibre de bambou. Une zone à forte rigidité peut également être obtenue en incorporant comme éléments de renfort d'autres structures en multiplis de bambou, bois ou autre matière thermomoulée lors de la fabrication des modules.

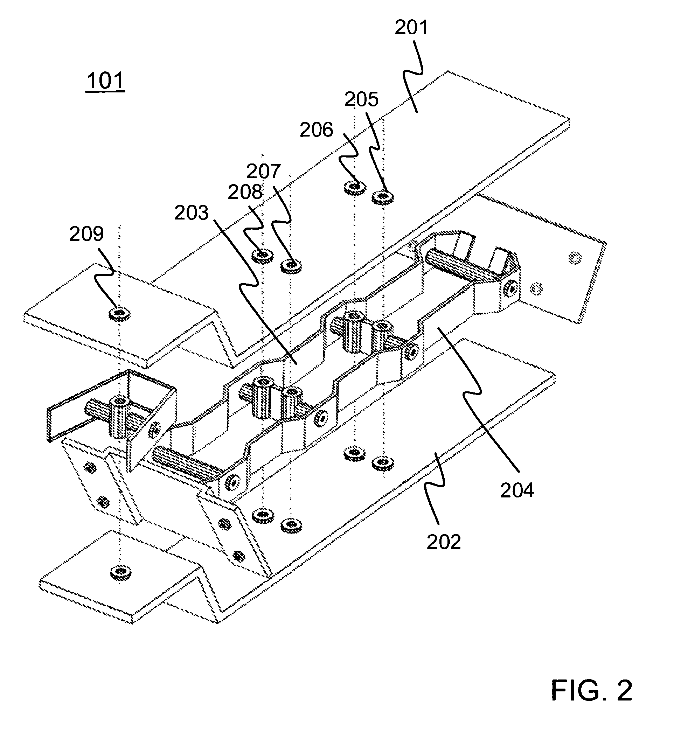

La figure 2 illustre schématiquement la poutre 101 formant partie du châssis du véhicule 100 au moyen d'une vue explosée en perspective. La poutre 101 est munie d'agencements de fixation 205-209 pour monter de façon amovible le jeu de modules sur la poutre 101. Ces agencements de fixation 205-209 peuvent comprendre, par exemple, des trous pour une fixation par des boulons traversants.

La poutre 101 comprend une paire de plateaux horizontaux 201, 202 disposés parallèlement l'un à l'autre. Les plateaux horizontaux 201, 202 peuvent être formés en S selon un axe longitudinal comme l'illustre la figure 2. Les plateaux horizontaux 201, 202 sont avantageusement à base de matière biologiquement décomposable. Par exemple, les plateaux horizontaux 201, 202 peuvent être réalisés en bois multiplis. Le bois multiplis peut être thermo-moulé avec déformation de précontrainte pour assurer un serrage adéquat.

La poutre 101 comprend entre outre une paire de platines verticales 203, 204 disposées parallèlement l'une à l'autre et perpendiculairement par rapport aux plateaux horizontaux 201, 202. La paire de platines verticales 203, 204 est enfermée entre la paire de plateaux horizontaux 201, 202. La paire de platines verticales 203, 204 fait partie d'une structure centrale. Cette structure centrale peut être mécano-soudée en acier ou en aluminium. La structure centrale peut également être réalisée en matériaux composites.

La structure centrale peut comprendre des éléments de jonction tels qu'illustrés à la figure 2. Ces éléments de jonction ont une double fonction : premièrement, assurer une liaison des différents éléments de la poutre 101 et, deuxièmement, permettre la fixation de modules sur la poutre 101. Les éléments de jonction peuvent être, par exemple, en acier forgé ou mécano-soudés.

Les platines verticales 203, 204 s'étendent en zigzag le long des plateaux horizontaux 201, 202. Ceci contribue à conférer une bonne rigidité à la poutre 101, aussi bien en flexion qu'en torsion. Chacune des platines verticales 203, 204 peut être pourvue de dents sur un bord touchant un des plateaux horizontaux 201, 202. Le plateau horizontal en question est alors formé de matière suffisamment molle pour que les dents puissent s'incruster dans le plateau horizontal.

La poutre 101 peut être munie d'un enrobement enserrant la paire de plateaux horizontaux 201, 202 et la paire de platines enfermée entre celle-ci. Ceci contribue à une bonne cohésion et stabilité du châssis. L'enrobement peut être réalisé par un procédé de surmoulage. Une version préliminaire de la poutre 101 est mise dans un bain de matière thermoplastique. Puis, la version préliminaire de la poutre 101, ayant subi le bain, est placée dans un moule de forme. Un avantage de cette technique est qu'elle permet de réaliser des ajustements précis à partir de surfaces de référence, qui sont convenablement calibrées grâce à un bon maintien géométrique des cotes. Ces ajustements peuvent s'effectuer lors du surmoulage ou par un usinage de surface ultérieur. Cette technique pourrait également permettre de mettre en place et de maintenir des inserts de fixation dans la poutre 101.

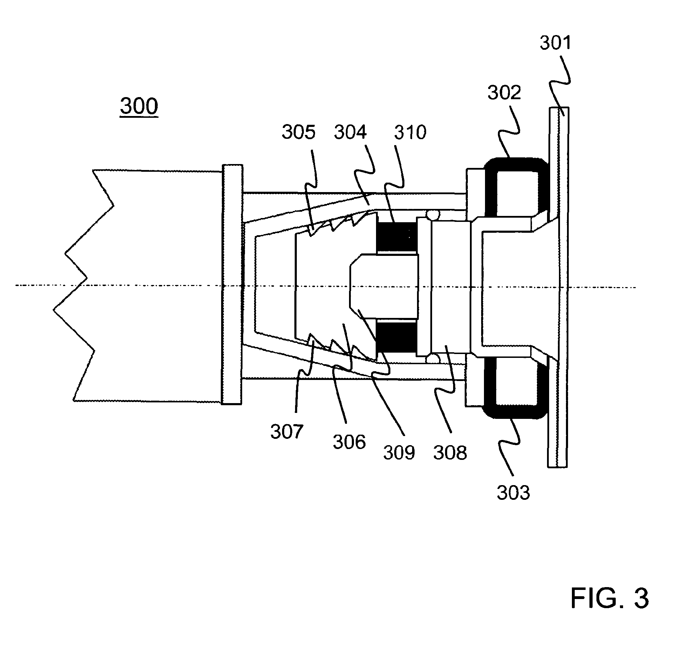

La figure 3 illustre schématiquement une vue en coupe d'un dispositif d'absorption de choc 300 pour le véhicule 100. Le dispositif d'absorption de choc 300 peut être disposé sur une extrémité de la poutre 101. Le dispositif d'absorption de choc 300 comprend une section frontale avec une surface frontale de contact 301. Des parois 302, 303 résistantes à la flexion s'étendent perpendiculairement de la surface frontale de contact 301 vers une section porteuse du châssis comprenant la paire de plateaux horizontaux 201, 202 illustrée à la figure 2. Les parois 302, 303 résistantes à la flexion comprennent avantageusement des fibres de bambou.

Le dispositif d'absorption de choc 300 comprend une section principale disposée entre la section frontale et la section porteuse du châssis. Cette section principale comprend un manchon 304 disposé perpendiculairement à la surface frontale de contact 301. Le manchon 304 a une cavité comprenant une série d'encoches 305 disposées de manière radiale sur une surface intérieure du manchon 304. Une structure de piston 306 se situe dans la cavité du manchon 304. Cette structure de piston 306 a une surface radiale entre deux extrémités de la structure de piston 306 La surface radiale est munie d'une série de rainures 307 complémentaire de la série d'encoches 305 sur la surface intérieure du manchon 304. Une extrémité de la structure de piston 306 est reliée à la section frontale du dispositif d'absorption de choc 300.

La structure de piston 306 comprend une section butoir 308, une section d'engagement 309, et une section à déformation élastique 310. La section butoir 308 relie la structure de piston 306 à la section frontale de contact. La section d'engagement 309 inclut la surface radiale munie de la série de rainures 307. La section à déformation élastique 310 est disposée entre la section butoir 308 et la section d'engagement 309.

Le dispositif d'absorption de choc 300 illustré à la figure 3 permet deux types de déformation : une déformation élastique réversible, et une déformation plastique programmée. La déformation élastique réversible offre une protection dans le cas d'un choc modeste, à basse vitesse. Dans ce cas, une décélération progressive convient. En effet, un impact a une puissance proportionnelle à son intensité et à sa durée. A intensité équivalente, plus le temps d'impact est court, plus le choc est violent. La déformation élastique réversible permet d'allonger la durée de l'impact. Il convient d'optimiser l'élasticité des matériaux et leur pouvoir de dissipation de l'énergie emmagasinée.

Dans le cas d'un choc important, il convient de dissiper l'énergie du choc par une déformation plastique programmée. Dans ce cas, la structure de piston 306 va « sauter un ou plusieurs crans » en déformant les rainures 307. Chaque fois que la structure de piston 306 passe un cran, une grande partie de l'énergie est dissipée dans une déformation permanente des rainures 307.

Un autre avantage du dispositif d'absorption de choc 300 illustré à la figure 3 est qu'il permet de doter la poutre 101 d'une structure «fusible», évitant ainsi une réparation ou un changement systématique de la poutre 101 suite à un choc.

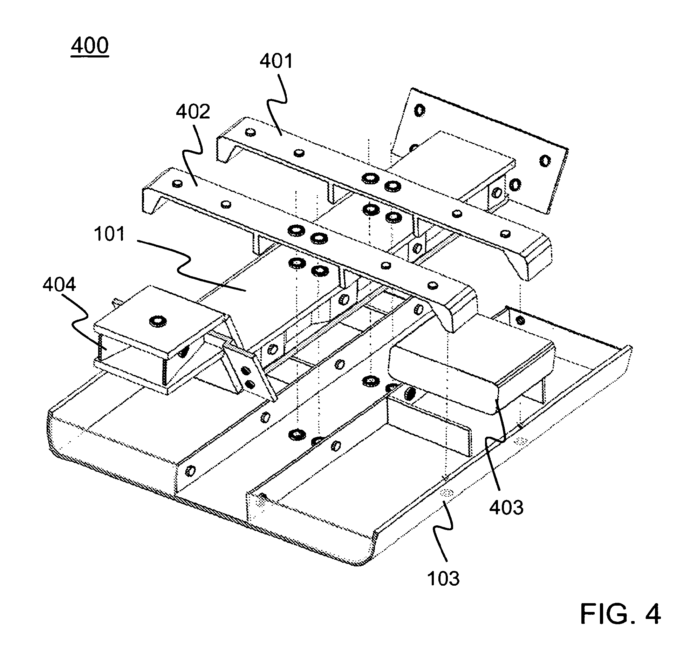

La figure 4 illustre schématiquement un montage 400 du module plancher 103 et des traverses de renfort 401, 402 sur la poutre 101 au moyen d'une vue explosée en perspective. Les traverses de renfort 401, 402 sont disposées perpendiculairement à la poutre 101 et elles sont fixées sur la poutre 101. Les traverses de renfort 401, 402 comprennent au moins un des matériaux suivants : du bois thermo-moulé, et du métal embouti.

Le module plancher 103 comprend un dispositif d'absorption de choc 403 disposé entre un bord du module plancher 103 et la poutre 101. Le dispositif d'absorption de choc 403 dans le module plancher 103 a une structure qui est similaire à celle du dispositif d'absorption de choc 300 décrit dans ce qui précède en référence à la figure 3. Le dispositif d'absorption de choc 300 peut être aménagé dans une cavité 404 sur une extrémité de la poutre 101.

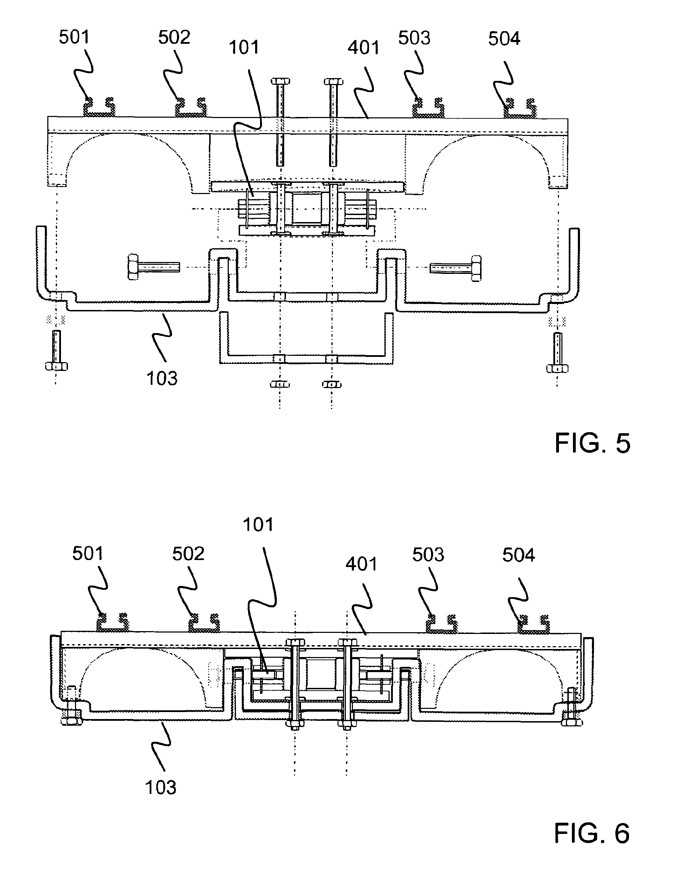

La figure 5 illustre schématiquement le montage du module plancher 103 et des traverses de renfort 401, 402 sur la poutre 101 au moyen d'une vue en coupe. Des glissières de siège 501-504 sont ajoutées.

La figure 6 illustre schématiquement un ensemble obtenu par le montage illustré à la figure 5.

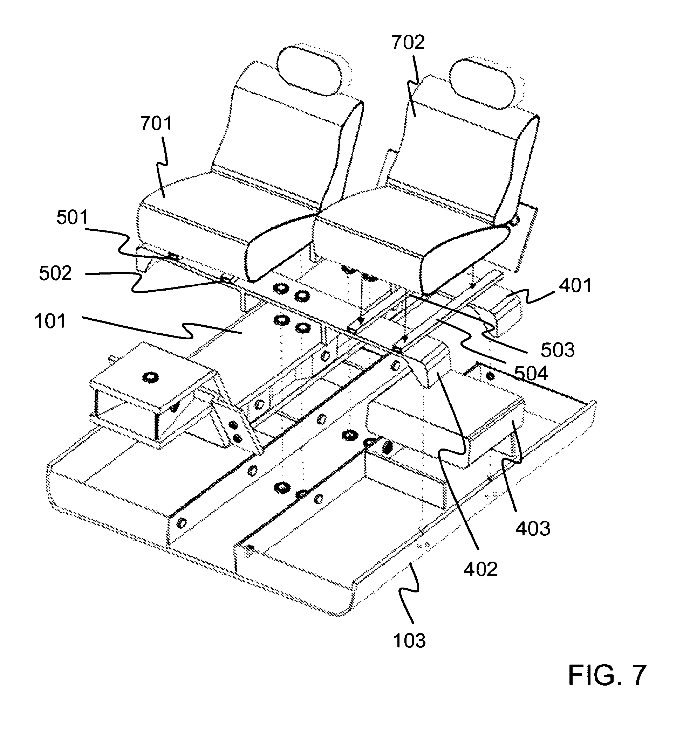

La figure 7 illustre schématiquement une vue explosée en perspective d'un montage des glissières de siège 501-504 et des sièges 701, 702 sur les traverses de renfort 401, 402.

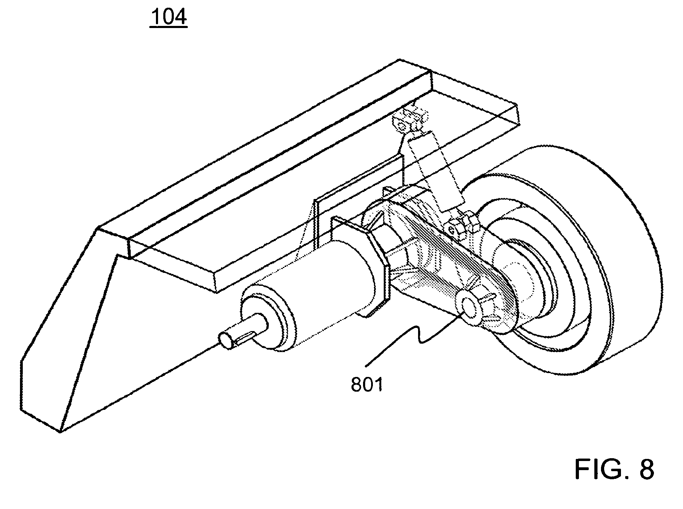

La figure 8 illustre schématiquement un module arrière 104 sur lequel un demi-train arrière droit 801 est monté au moyen d'une vue en perspective.

Se référant à nouveau aux figures 1 et 2, un espace situé à une partie arrière de la poutre 101, entre les plateaux horizontaux 201, 202, peut être agencé pour y stocker des batteries de traction. Les batteries peuvent être montées dans un rack ventilé coulissant vers l'arrière. Le rack peut également être muni d'un système antichoc arrière, identique au dispositif d'absorption de choc 300 décrit dans ce qui précède et qui est illustré à la figure 3.

Le véhicule 100 peut ainsi avoir une propulsion purement électrique fournie par des batteries facilement interchangeables. Son autonomie peut être accrue en cas de besoin grâce à l'utilisation d'un module additionnel de type « unité d'extension de rayon d'action », en anglais : « range extender », doté d'un petit moteur à combustion interne de faible consommation et de petite cylindrée actionnant une génératrice. Ainsi, les batteries peuvent être rechargées en cours de roulage.

Les modules peuvent être électriquement interconnectés à l'aide de connecteurs magnétiques à coupure de contact automatique à la déconnexion. De préférence, les modules ne véhiculent que des courants de faible puissance. Pour ce faire, un module possède avantageusement une unité de stockage d'énergie qui lui est propre. C'est un concept de batteries décentralisées. Ces batteries peuvent être rechargées par une diversité de sources possibles : solaire, éolien, prise secteur, etc....

La description détaillée en référence aux figures est simplement une illustration de l'invention. L'invention peut être réalisée de nombreuses façons différentes ces façons différentes restant dans le cadre définit par les revendications. Afin d'illustrer ceci, quelques alternatives sont indiquées sommairement.

L'invention peut être appliquée avantageusement dans de nombreuses applications dans le domaine du transport.

Il existe de nombreux types d'agencements de fixations. Une fixation par boulons n'est qu'un exemple.

Le terme « poutre » doit être interprété de façon large. Ce terme embrasse tout type d'entité de forme longitudinale et ayant une rigidité relativement grande afin de pouvoir constituer une base pour une structure mécanique.

Les remarques qui précèdent montrent que la description détaillée en référence aux figures illustre l'invention plutôt qu'elle ne la limite. Les signes de références n'ont aucun caractère limitatif.

## Revendications

1. Véhicule (100) disposant d'au moins deux paires de roues et muni d'un châssis, le véhicule comprenant :
- une poutre (101) disposée de manière centrale par rapport aux paires de roues, la poutre (101) étant munie d'agencements de fixation (205-209) pour monter de façon amovible un jeu de modules sur la poutre (101), le jeu de modules comprenant au moins un module avant (102) pouvant accueillir un train avant, un module plancher (103), et un module arrière (104) pouvant accueillir un train arrière,
la poutre (101) comprend :
- une paire de plateaux horizontaux (201, 202) disposés parallèlement l'un à l'autre, et
- une paire de platines verticales (203, 204) disposées parallèlement l'une à l'autre et perpendiculairement par rapport aux plateaux horizontaux (201, 202), la paire de platines étant enfermée entre la paire de plateaux horizontaux (201, 202)
et **caractérisé en ce que** les dites platines verticales s'étendent en zigzag le long des plateaux horizontaux (201, 202).

2. Véhicule (100) selon la revendication 1, dans lequel les plateaux horizontaux (201, 202) sont à base de matière biologiquement décomposable.

3. Véhicule (100) selon l'une quelconque des revendications 1 et 2, dans lequel les plateaux horizontaux (201, 202) sont en bois multiplis moulé.

4. Véhicule (100) selon l'une quelconque des revendications 1 à 3, dans lequel les platines verticales (203, 204) sont en métal léger.

5. Véhicule (100) selon l'une quelconque des revendications 1 à 4, dans lequel au moins une des platines verticales (203, 204) est pourvue de dents sur un bord touchant un des plateaux horizontaux (201, 202), ce plateau horizontal étant formé de matière suffisamment molle pour que les dents puissent s'incruster dans le plateau horizontal.

6. Véhicule (100) selon l'une quelconque des revendications 1 à 4, dans lequel le châssis comprend un enrobement enserrant la paire de plateaux horizontaux (201, 202) et la paire de platines enfermée entre celle-ci.

7. Véhicule (100) selon la revendication 6, dans lequel l'enrobement est en matière thermoplastique.

8. Véhicule (100) selon l'une quelconque des revendications 1 à 7, dans lequel au moins un des modules montables de façon amovible sur la poutre (101) comprend des fibres résistantes à la flexion.

9. Véhicule (100) selon la revendication 8, dans lequel les fibres résistantes à la flexion comprennent des fibres de bambou.

10. Véhicule (100) selon l'une quelconque des revendications 8 et 9, dans lequel les fibres résistantes à la flexion sont liées entre elles par une matière thermoplastique.

11. Véhicule (100) selon l'une quelconque des revendications précédentes, comprenant des traverses de renfort (401, 402) disposées perpendiculairement à la poutre (101), les traverses de renfort (401, 402) étant fixées sur la poutre (101).

12. Véhicule (100) selon la revendication 11, dans lequel les traverses de renfort (401, 402) comprennent au moins un des matériaux suivants : du bois thermo-moulé, et du métal embouti.

13. Poutre (101) pour un véhicule (100), le véhicule disposant d'au moins deux paires de roues et muni d'un châssis, la poutre (101) étant apte à être disposée de manière centrale par rapport aux paires de roues, la poutre (101) étant munie d'agencements de fixation (205-209) pour monter de façon amovible un jeu de modules sur la poutre (101), le jeu de modules comprenant au moins un module avant (102) pouvant accueillir un train avant, un module plancher (103), et un module arrière (104) pouvant accueillir un train arrière,
la poutre (101) comprend :
- une paire de plateaux horizontaux (201, 202) disposés parallèlement l'un à l'autre, et
- une paire de platines verticales (203, 204) disposées parallèlement l'une à l'autre et perpendiculairement par rapport aux plateaux horizontaux (201, 202), la paire de platines étant enfermée entre la paire de plateaux horizontaux (201, 202) et **caractérisé en ce que** les dites platines verticals s'étendent en zigzag le long des plateaux horizontaux (201, 202).

## Claims

1. Vehicle (100) having at least two pairs of wheels and provided with a frame, the vehicle comprising:
- a beam (101) disposed centrally with respect to the pairs of wheels, the beam (101) being provided with fastening arrangements (205-209) for detachably mounting a set of modules on the beam (101), the set of modules comprising at least one front module (102) accommodating a front end, a floor module (103), and a rear module (104) that can accommodate a rear axle,
the beam (101) comprises:
- a pair of horizontal plates (201, 202) arranged parallel to each other,
- a pair of vertical plates (203, 204) arranged parallel to each other and perpendicular to the horizontal plate (201, 202), the pair of plates being enclosed between the pair of horizontal plates (201, 202) and **characterized in that** said vertical plates extend zigzag along the horizontal plates (201, 202).

2. Vehicle (100) according to claim 1, wherein the horizontal plates (201, 202) are made of biologically decomposable material.

3. Vehicle (100) according to any one of claims 1 to 2, wherein the horizontal plates (201, 202) are molded in plywood.

4. Vehicle (100) according to any one of claims 1 to 3, wherein the vertical plates (203, 204) are made of light metal.

5. Vehicle (100) according to any one of claims 1 to 4, wherein at least one of the vertical plates (203, 204) is provided with teeth on one edge touching one of the horizontal plates (201, 202), the horizontal plate being formed of sufficiently soft matter so that the teeth can be encrusted in the horizontal plate.

6. Vehicle (100) according to any of the claims 1 to 4, wherein the frame includes a coating enclosing the pair of horizontal plates (201, 202) and the pair of vertical plates enclosed between the latter.

7. Vehicle (100) according to the claim 6, wherein the coating is out of thermoplastic matter.

8. Vehicle (100) according to any of the claims 1 to 7, wherein at least one module removably mountable on the beam (101) comprises fibers resistant to bending.

9. Vehicle (100) according to the claim 8, wherein the fibers resistant to bending include bamboo fibers.

10. Vehicle (100) according to any of the claims 8 and 9, wherein the fibers resistant to bending are bound together by a thermoplastic material.

11. Vehicle (100) according to any of the preceding claims, comprising reinforcing webs (401, 402) arranged perpendicularly to the beam (101), the reinforcing webs (401, 402) being fixed to the beam (101).

12. Vehicle (100) according to the claim 11, wherein the reinforcing webs (401, 402) comprises at least one of the following materials: thermo-molded wood, and pressed metal.

13. Beam (101) for a vehicle (100), the vehicle having at least two pairs of wheels and provided with a chassis, the beam (101) being adapted to be disposed centrally with respect to the pairs of wheels, the beam (101) being provided with fastening arrangements (205-209) for detachably mounting a set of modules on the beam (101), the set of modules comprising at least one front module (102) accommodating a front end, a floor module (103), and a rear module (104) that can accommodate a rear axle,
the beam (101) comprises:
- a pair of horizontal plates (201, 202) arranged parallel to each other,
- a pair of vertical plates (203, 204) arranged parallel to each other and perpendicular to the horizontal plate (201, 202), the pair of plates being enclosed between the pair of horizontal plates (201, 202) and **characterized in that** said vertical plates extend zigzag along the horizontal plates (201, 202).

## Patentansprüche

1. Fahrzeug (100) mit mindestens zwei Paaren von Rädern und mit einem Gestell, das Fahrzeug umfassend:
- ein Balken (101) angeordnet mittig bezüglich der Paare der Räder, wobei der Balken (101) mit Befestigungsanordnungen (205-209) ausgestattet ist zum lösbaren Befestigen einer Satz von Modulen an dem Träger (101), der Satz von Modulen umfassend mindestens einen vorderen Modul (102) das ein vorderes Ende aufnehmen kann, ein Boden Modul (103) und ein hinteres Modul (104) das eine Hinterachse aufnehmen kann,
der Balken (101) umfasst:
- ein Paar von horizontalen Platten (201, 202), die parallel zueinander sind, und
- ein Paar von vertikalen Platten (203, 204) die parallel zueinander sind und senkrecht zu der horizontalen Platten (201, 202), wobei der Paar von vertikalen Platten zwischen dem Paar von horizontalen Platten (201, 202) eingeschlossen ist und **dadurch gekennzeichnet, dass** die vertikalen Platten zickzackförmig verlaufen entlang der horizontalen Platten (201, 202).

2. Fahrzeug (100) nach Anspruch 1, wobei die horizontale Platte (201, 202) aus biologisch abbaubaren Material hergestellt ist.

3. Fahrzeug (100) nach irgendeiner einer Anspruch 1 und 2, wobei die horizontale Platte (201, 202) in Sperrholz geformt ist.

4. Fahrzeug (100) nach irgendeiner einer Anspruch 1 bis 3, wobei die vertikalen Platten (203, 204) aus Leichtmetall besteht.

5. Fahrzeug (100) nach irgendeiner einer Anspruch 1 bis 4, wobei zumindest eine der vertikalen Platten (203, 204) ausgestattet ist mit Zähnen auf einem Rand der eines der horizontalen Platten (201, 202) berühren, wobei diese horizontalen Platte aus genügend mildem Material gebildet ist, damit die Zähne sich im horizontalen Platte inkrustieren können.

6. Fahrzeug (100) nach irgendeiner einer Anspruch 1 bis 4, wobei das Gestell eine Vergussmasse umfasst, das das Paar horizontaler Platten (201, 202) und die dazwischen eingeschlossene Paar vertikalen Platten umschließt.

7. Fahrzeug (100) nach Anspruch 6, wobei die Vergussmasse ein thermoplastisches Material ist.

8. Fahrzeug (100) nach irgendeiner einer Anspruch 1 bis 7, wobei wenigstens ein der Modulen, die lösbar auf dem Balken (101) befestigt werden kann, Fasern umfasst die widerstandsfähig gegen Biegen sind.

9. Fahrzeug (100) nach Anspruch 8, wobei die Fasern, die widerstandsfähig gegen Biegen sind, Bambusfasern umfassen.

10. Fahrzeug (100) nach irgendeiner einer Anspruch 8 und 9, wobei die Fasern, die widerstandsfähig gegen Biegen sind, durch ein thermoplastisches Material gebunden sind.

11. Fahrzeug (100) nach irgendeiner einer der vorhergehenden Ansprüchen, angeordnet mit Verstärkungsstege (401, 402) senkrecht zu dem Balken (101), wobei die Verstärkungsstege (401, 402) an dem Balken (101) befestigt sind.

12. Fahrzeug (100) nach Anspruch 11, wobei die Verstärkungsstege (401, 402), wenigstens eines der folgenden Materialien umfassen: Thermo-geformtes Holz und zerbeultes Metall.

13. Balken (101) für ein Fahrzeug (100) mit mindestens zwei Paaren von Rädern und mit einem Gestell, wobei der Balken (101) geeignet ist um mittig bezüglich der Paaren von Räder angeordnet zu werden, und wobei der Balken (101) mit Befestigungsanordnungen (205-209) ausgestattet ist zum lösbaren Befestigen einer Satz von Modulen an dem Träger (101), der Satz von Modulen umfassend mindestens einen vorderen Modul (102) das ein vorderes Ende aufnehmen kann, ein Boden Modul (103) und ein hinteres Modul (104) das eine Hinterachse aufnehmen kann
der Balken (101), umfasst:
- ein Paar von horizontalen Platten (201, 202), die parallel zueinander sind, und
- ein Paar von vertikalen Platten (203, 204) die parallel zueinander sind und senkrecht zu der horizontalen Platten (201, 202), wobei der Paar von vertikalen Platten zwischen dem Paar von horizontalen Platten (201, 202) eingeschlossen ist und **dadurch gekennzeichnet, dass** die vertikalen Platten zickzackförmig verlaufen entlang der horizontalen Platten (201, 202).
